Europäisches Patentamt

European Patent Office

Office européen des brevets

(11) Veröffentlichungsnummer: **0 281 764 B1**

(12) **EUROPÄISCHE PATENTSCHRIFT**

(45) Veröffentlichungstag der Patentschrift: **13.05.92**

(21) Anmeldenummer: **88101658.8**

(22) Anmeldetag: **05.02.88**

(51) Int. Cl.⁵: **B29C 65/00**, F16L 59/02

(54) Verfahren und Vorrichtung zur Herstellung von geschlitzten Isolierschläuchen für Rohre oder dergleichen.

(30) Priorität: **07.03.87 DE 3707316**

(43) Veröffentlichungstag der Anmeldung:
**14.09.88 Patentblatt 88/37**

(45) Bekanntmachung des Hinweises auf die
Patenterteilung:
**13.05.92 Patentblatt 92/20**

(84) Benannte Vertragsstaaten:
**AT BE CH DE ES FR GB GR IT LI LU NL SE**

(56) Entgegenhaltungen:
**BE-A- 904 347**
**DE-A- 3 431 477**
**FR-A- 2 271 006**
**US-A- 2 997 099**
**US-A- 3 691 990**

(73) Patentinhaber: **Pfitzmann, Wolfgang**
**Lüner Rennbahn 20**
**W-2120 Lüneburg(DE)**

(72) Erfinder: **Pfitzmann, Wolfgang**
**Lüner Rennbahn 20**
**W-2120 Lüneburg(DE)**

(74) Vertreter: **Dipl.-Ing. H. Hauck, Dipl.-Ing. E.
Graalfs, Dipl.-Ing. W. Wehnert, Dr.-Ing. W. Döring
Neuer Wall 41
W-2000 Hamburg 36(DE)**

Rank Xerox (UK) Business Services
(3.08/2.19/2.0)

**Beschreibung**

Die Erfindung bezieht sich auf eine Vorrichtung zum Herstellen von geschlitzten Isolierschlauchen für Rohre oder dergleichen nach dem Oberbegriff des Patentanspruchs 1.

Aus der DE-A-34 31 477 ist bekanntgeworden, einen Isolierschlauch axial aufzuschneiden und eine Schnittfläche mit einem Klebeband zu versehen, das durch eine folienartige Abdeckung abgedeckt ist. Der einseitig längsgeschlitzte Schlauch wird zum Beispiel auf ein bereits verlegtes Rohr aufgebracht, wobei die Schnittstelle anschließend durch Entfernen der Abdeckfolie mit Hilfe des Klebebandes wieder verschlossen wird.

Die Länge des Isolierschlauchs ist erst im Anwendungsfall bekannt. Es ist daher durchaus zweckmäßig, das Aufbringen des Klebebandes erst anwenderseitig vorzunehmen, wenn entsprechende Längen Isolierschlauch vorliegen. Der Erfindung liegt daher die Aufgabe zugrunde, eine einfach aufgebaute Vorrichtung zum Herstellen von geschlitzten Isolierschläuchen für Rohre oder dergleichen anzugeben, mit der auf einfache Weise das Klebeband auf eine Schnittfläche aufgebracht wird. Diese Aufgabe wird erfindungsgemäß gelöst durch die Merkmale des Patentanspruchs 1.

Die erfindungsgemäße Vorrichtung umfaßt ein Handgerät, das ein Griffteil und an der Unterseite ein Messer aufweist. Es enthält ferner ein Lagerbauteil für eine Klebebandrolle sowie Führungsmittel. Mit Hilfe der Führungsmittel wird das von der Rolle abgewickelte Klebeband derart geführt, daß es in Schneidrichtung gesehen hinter dem Messer und etwa in Höhe des Messers annähernd

Schließlich ist auch bekanntgeworden, geschlitzte Schläuche herstellerseitig so vorzubereiten, daß eine Schnittfläche mit Klebstoff versehen wird und die mit Klebstoff versehene Schnittfläche durch ein Silikonband abgedeckt wird. Der Anwender entfernt das Silikonband, nachdem der geschlitzte Schlauch um die Rohrleitung herumgelegt wurde und verklebt anschließend die Schnittflächen miteinander. Dieses Verfahren hat den Nachteil, daß es anwenderseitig nicht eingesetzt werden kann. Der Anwender muß vielmehr über einen ausreichenden Vorrat an geschlitzten vorbereiteten Schläuchen verfügen.

Der Erfindung liegt daher die Aufgabe zugrunde, ein Verfahren zur Herstellung von geschlitzten Isolierschläuchen für Rohre oder dergleichen anzugeben, das ein Aufschlitzen und ein einfaches Wiederverschließen des Schlitzes auf einfache Weise auch dem Anwender erlaubt.

Diese Aufgabe wird erfindungsgemäß durch das Merkmal des Kennzeichnungsteils des Anspruchs 1 gelöst.

Bei dem erfindungsgemäßen Verfahren wird auf die Schnittfläche ein doppelt klebendes einseitig mit einem Folienstreifen abgedecktes Klebeband aufgebracht. Vorzugsweise wird das Klebeband gleichzeitig mit dem Aufschneiden des Schlauches aufgebracht.

Doppelt klebende, einseitig abgedeckte Klebebänder sind bekannt und überall im Handel erhältlich. Der Anwender kann den Schlauch in der gewünschten Länge aufschneiden und auf die Schnittfläche das Klebeband aufbringen. Das Aufbringen des Klebebandes bereitet keine Schwierigkeiten. Nachdem der geschlitzte Schlauch um eine Leitung herum verlegt worden ist, wird der Abdeckfolienstreifen abgezogen, so daß auch die zweite Klebfläche des Klebebands wirksam ist. Durch einfaches Zusammendrücken der Schnittstellen kann anschließend deren Verklebung erfolgen.

Es versteht sich, daß das Klebeband auch bereits vom Hersteller des Isolierschlauchs auf die Schnittfläche aufgebracht werden kann.

Wie bereits erwähnt, ist das Aufbringen eines Klebebandes gleichzeitig mit dem Aufschneiden eines Schlauches von besonderem Vorteil. Die Erfindung sieht hierzu eine Vorrichtung vor, welche durch die Merkmale des Anspruchs 4 gekennzeichnet ist. Die erfindungsgemäße Vorrichtung umfaßt ein Handgerät, das ein Griffteil und an der Unterseite ein Messer aufweist. Es enthält ferner ein Lagerbauteil für eine Klebebandrolle sowie Führungsmittel. Mit Hilfe der Führungsmittel wird das von der Rolle abgewickelte Klebeband derart geführt, daß es in Schneidrichtung gesehen hinter dem Messer und etwa in Höhe des Messers annähernd entgegen der Schneidrichtung geführt ist. Das erfindungsgemäße Handgerät wird auf einen Schlauch aufgesetzt. Durch Vorbewegen in Längsrichtung des Schlauches schneidet das Messer die Schlauchwandung einseitig auf. Das hinter dem Messer herausgeführte Klebeband gelangt dabei mit seiner Klebefläche gegen eine Schnittfläche und haftet dort fest. Beim weiteren Vorbewegen wird somit das Klebeband selbsttätig von der Rolle abgewickelt und fortlaufend gegen die Schnittfläche gelegt. Nach dem Aufschneiden des Schlauches wird diese Bewegung fortgesetzt, bis das Klebeband das Ende des Schlauches erreicht hat. Anschließend wird das Klebeband abgeschnitten.

Die erfindungsgemäße Vorrichtung ist außerordentlich einfach zu handhaben. Das Aufbringen des Klebebands auf die Schnittfläche könnte mit Hilfe einer an sich bekannten Abrollvorrichtung erfolgen, nachdem der Schlauch aufgeschlitzt wurde. Bei der erfindungsgemäßen Vorrichtung findet das Aufschneiden und Aufbringen des Klebebandes gleichzeitig statt. Hierin liegt eine erhebliche Arbeitserleichterung und Zeitersparnis.

Damit ein zusätzliches Werkzeug für das Abschneiden des Klebebandes entfällt, sieht eine Ausgestaltung der Erfindung vor, daß am Handgerät in Schneidrichtung gesehen hinter dem Messer ein Abschneidemesser beweglich gelagert ist. Vorzugsweise ist das Abschneidemesser so betätigbar, daß seine Betätigung vom Griffteil des Handgeräts aus erfolgen kann.

Um die Handhabung des erfindungsgemäßen Handgeräts zu erleichtern, sieht eine andere Ausgestaltung der Erfindung vor, daß das Messer über eine Führungsfläche nach unten vorsteht. Die Führungsfläche wird auf den Schlauch aufgesetzt und gleitet auf der Schlauchoberfläche, während das Messer in die Schlauchwandung schneidet. Die Führungsfläche gibt mithin auch die maximale Tiefe des Schnitts vor. In jedem Fall muß vermieden werden, daß das Messer in die Innenwandung auf der gegenüberliegenden Seite einschneidet.

Um eine wirksame Verbindung des Klebebandes mit der Schnittfläche zu erhalten, sieht eine weitere Ausgestaltung der Erfindung Aufspreizmittel vor, die in Schneidrichtung gesehen hinter dem Messer angeordnet sind. Sie stehen über die Führungsfläche nach unten vor und drücken die Schnittflächen auseinander. Dadurch üben die Schnittflächen einen Druck auf die Aufspreizmittel aus und somit auch auf das Klebeband, das lagerichtig geführt gegen eine Schnittfläche gelegt wird. Aufgrund dieses Druckes wird eine ausreichend feste Verbindung zwischen Klebeband und Schnittfläche des Schlauches erhalten. Die Aufspreizmittel können von einer Leiste gebildet sein, die sich zum Messer hin keilförmig verjüngt. Hierbei kann das Klebeband aus einer seitlichen Öffnung der Aufspreizleiste herausgeführt werden. Hinter der Austrittsöffnung des Klebebandes kann - in Schneidrichtung gesehen - eine rampenartige Andrückfläche vorgesehen sein, über welche eine zusätzliche Spreizung erfolgt.

Das Lagerbauteil für die Klebebandrolle ist vorzugsweise an einem seitlichen Arm des Gerätes angebracht.

Das Messer, beispielsweise eine Messerklinge, kann fest mit dem Handgerät verbunden sein. Bevorzugt ist jedoch ein einfaches Auswechseln des Messers, falls es stumpf geworden ist. Es ist auch denkbar, das Messer verstellbar anzuordnen, um eine unterschiedliche Schnittiefe zu erhalten.

Aus Sicherheitsgründen ist das Messer vorzugsweise in einem Messerhalter aufgenommen, wobei der Messerhalter einen unteren Schutzabschnitt aufweist, der entgegen der Schneidrichtung über die Klinge hinaussteht. Dieser Schutzabschnitt bildet zugleich eine Führung innerhalb des aufzuschneidenden Schlauches, die verhindert, daß das Messer die Schlauchwand nur teilweise durchschneidet. Ebenfalls aus Sicherheitsgründen ist das Messer vorzugsweise vollständig im Gehäuse versenkbar. Bei Nichtgebrauch wird das Messer vorzugsweise im Gehäuse versenkt, damit der Benutzer keine Verletzungen erleidet und das Messer selbst nicht beschädigt wird. Die Verstellung des Messers bzw. der Messerführung kann z.B. mit einer Gewindespindel oder mittels eines Schlittens oder dergleichen erfolgen, der in verschiedenen Raststellungen festlegbar ist.

Das Klebeband wird, bevor es durch einen Schlitz oder eine Öffnung in der Führungsleiste tritt, von einer Fläche der Führungsleiste geführt. Diese Fläche ist nach einer Ausgestaltung der Erfindung vorzugsweise ein getrenntes Teil, das ebenfalls höhenverstellbar gelagert ist. Die Höhenverstellbarkeit erlaubt eine Anpassung an unterschiedlich breite Klebebänder. Ferner ist die mit der klebenden Seite des Klebebands in Eingriff bringbare Führungsfläche in Vorschubrichtung des Klebebands geriffelt oder dergleichen, wodurch eine geringe Haftfläche für das Klebeband geschaffen ist.

Wie bereits erwähnt, ist das Abschneidmesser im hinteren Endbereich des Gehäuses gelagert. In diesem Zusammenhang sieht eine Ausgestaltung der Erfindung vor, daß das Abschneidmesser auf einer sich durch das Gehäuse erstreckenden Welle sitzt und im Gehäuse eine von oben betätigbare Betätigungsstange gelagert ist, die über eine Kurbel oder dergleichen mit der Welle zusammenwirkt. Die Welle und/oder die Betätigungsstange können von einer Feder beaufschlagt werden, um die Teile in die Ausgangsstellung zurückzubringen, wenn ein Druck auf die Betätigungsstange beendet wird. Die Anordnung einer Betätigungsstange unmittelbar im Griffbereich erlaubt eine sehr leichte und einfache Betätigung des Abschneidmessers. Das Abschneidmesser selbst ist vorzugsweise im Gehäuse so gelagert, daß es in seiner Ruhestellung vom Gehäuse verdeckt ist, so daß auch eine unachtsame Handhabung des Gerätes keine Gefährdung mit sich bringt.

Im Schwenkbereich des Abschneidmessers ist vorzugsweise ein saugfähiges Material, z.B. Filz angeordnet. Während der Schwenkbewegung streift das Abschneidmesser an dem Filz entlang und kann z.B. mit einem Ölfilm versehen werden, wenn der Filz mit Öl getränkt worden ist. Das Öl am Abschneidmesser hat den Vorteil, daß das Ablagern von Klebstoff am Abschneidmesser vermieden wird.

Wie bereits erwähnt, ist die Klebebandrolle an einem seitlich abstehenden Arm gelagert. Nach einer Ausgestaltung der Erfindung ist der Arm an der vorderen Stirnseite schwenkbar gelagert und sowohl in der seitlich auskragenden Betriebsstellung als auch in der in der Ebene des Gehäuses liegenden Ruhestellung verriegelbar. Die Verriegelung kann beispielsweise in der Form erfolgen, daß das mit dem Arm verbundene Lagerbauteil in Richtung der Schwenkachse begrenzt verschiebbar ist, so daß ein Wegziehen des Lagerbauteils vom Gehäuse eine Entriegelung bewirken kann, um den Arm in die Betriebsstellung bzw. die Ruhestellung zu verschwenken.

Die Erfindung wird nachfolgend anhand von Zeichnungen näher erläutert.

Fig. 1 zeigt schematisch die Seitenansicht eines Handgeräts nach der Erfindung.

Fig. 2 zeigt die Draufsicht auf das Gerät nach Fig. 1.

Fig. 3 zeigt die Untersicht des Geräts nach Fig. 1, wobei jedoch einige Teile fortgelassen sind.

Fig. 4 zeigt eine Seitenansicht des Geräts nach Fig. 1 in Richtung des Pfeils 4 nach Fig. 2, jedoch nur abschnittsweise.

Fig. 5 zeigt perspektivisch eine längsaufgeschnittenen Isolierschlauch mit einem Klebeband.

Fig. 6 zeigt teilweise im Schnitt eine weitere Ausführungsform eines Handgeräts nach der Erfindung.

Fig. 7 zeigt eine Draufsicht auf die Darstellung nach Fig. 6.

Fig. 8 zeigt einen Schnitt durch die Darstellung nach Fig. 6 entlang der Linie 8-8.

Fig. 9 zeigt einen Schnitt durch die Darstellung nach Fig. 6 entlang der Linie 9-9.

Fig. 10 zeigt eine Endansicht des Geräts nach Fig. 6 in Richtung Pfeil 10.

Fig. 11 zeigt einen Schnitt durch die Darstellung nach Fig. 6 entlang der Linie 11-11.

Fig. 12 zeigt eine Ansicht gemäß Fig. 6 des Messers und des Führungsteils in einer abgewandelten Ausführungsform.

Fig. 13 zeigt eine Draufsicht auf ein Führungsstück der Darstellung nach Fig. 12.

Bevor auf die in den Zeichnungen dargestellten Einzelheiten näher eingegangen wird, sei vorangestellt, daß jedes der beschriebenen Merkmale für sich oder in Verbindung mit Merkmalen der Ansprüche von erfindungswesentlicher Bedeutung ist.

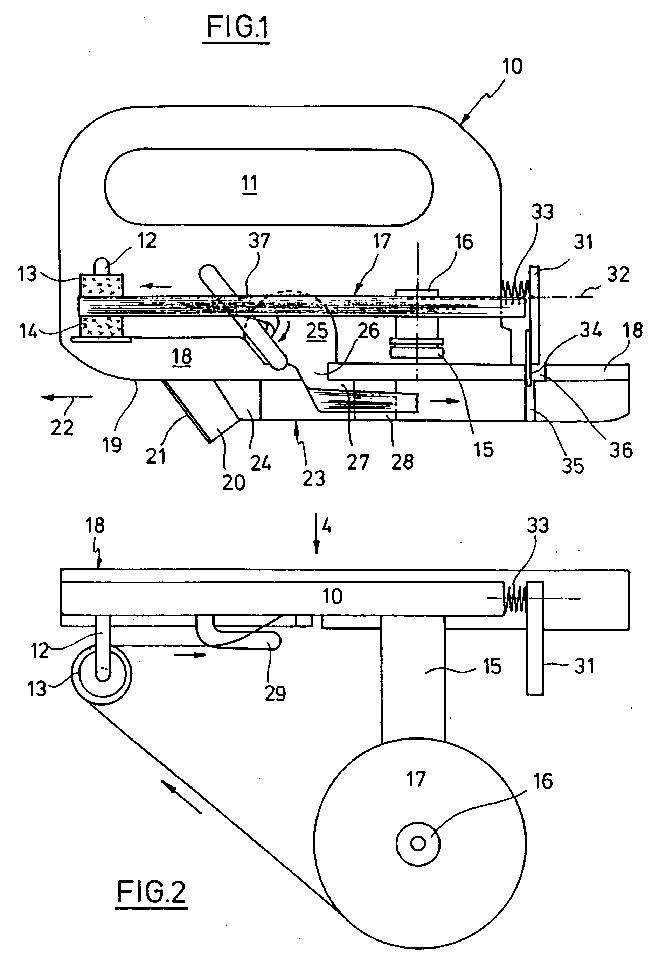

Das in den Figuren 1 bis 4 dargestellte Handgerät weist eine aufrechte Platte 10 auf, die im oberen Bereich mit einem Griffloch 11 versehen ist. Die Platte 10 ist im übrigen im oberen Bereich ebenfalls griffgerecht geformt. Unterhalb des Grifflochs 11 ist ein rechtwinklig abstehender Lagerarm 12 seitlich angebracht. Sein nach unten weisender, im Abstand parallel zur Platte 10 verlaufender Abschnitt lagert eine Umlenkrolle 13. Die Umlenkrolle ist an der Außenseite geriffelt, wie bei 14 gezeigt. Am anderen Ende der Platte 10 ist auf der gleichen Seite ein Lagerarm 15 angebracht, der sich rechtwinklig von der Platte 10 erstreckt.

Auf dem Lagerarm ist um eine Achse parallel zur Achse der Rolle 13 eine Buchse 16 drehbar gelagert. Der Außendurchmesser der Buchse 16 ist derart, daß er die innere Öffnung einer handelsüblichen Klebebandrolle 17 aufnimmt.

An der Unterseite der Platte 10 ist ein Gleitschuh 18 angebracht, der in Fig. 1 auf der rechten Seite in der Höhe etwas geringer ausgeführt ist. Der Gleitschuh besitzt an der Unterseite eine Führungsfläche 19. Im Gleitschuh ist auch ein Messerblatt 20 angebracht, das über die Führungsfläche 19 nach unten vorsteht. Die Schneidkante 21 des Messerblatts 20 verläuft schräg nach hinten und unten, wenn die Bewegungs- und damit Schneidrichtung mit Pfeil 22 angegeben ist. In Schneidrichtung gesehen grenzt an das Messer 20 eine Aufspreizleiste 23 an. Sie steht nach unten über die Führungsfläche 19 vor und hat eine etwas geringere Tiefe als das Messer 20. Zum Messer verjüngt sich die Aufspreizleiste 23 keilförmig, wie bei 24 gezeigt.

Die Platte 10 ist etwa in der Mitte durchbrochen wie bei 25 gezeigt. Auch der Schuh weist unterhalb des Durchbruchs 25 eine Durchbrechung 26 auf. Schließlich ist auch die Aufspreizleiste unterhalb des Durchbruchs 26 bei 27 mit einem Durchbruch versehen. Hinter dem Druchbruch 27 verbreitert sich die Aufspreizleiste 23 keilartig, wie bei 28 gezeigt. Auf der gleichen Seite wie die Umlenkrolle 13 ist eine L-förmige Umlenkstange 29 an der Platte 10 angebracht. Der kurze Arm ist an der Platte befestigt, während der längere Arm sich parallel und im Abstand zur Platte 10 schräg nach unten erstreckt (siehe Fig. 1). Der längere Arm erstreckt sich dabei teilweise über die Druchbrechung 25. Innerhalb der Durchbrechung 25 ist eine weitere Umlenkstange 30 angeordnet, die in der Ebene der Platte 10 liegt und sich am unteren Ende in einen nicht gezeigten Schlitz des Schuhs 18 hineinerstreckt. Der Schlitz hat größere Abmessungen als der Durchmesser der Stange 30. Der Schlitz erstreckt sich bis in die Aufspreizleiste 23, und die Stange 30 reicht ebenfalls bis nahe an die Unterseite der Aufspreizleiste 23.

An der hinteren Stirnseite ist ein Messerhalter 31 um eine Achse 32, die mit der Längsrichtung der Platte 10 zusammenfällt, drehbar gelagert. Eine Feder 33 beaufschlagt den Messerhalter 31 derart, daß er ein Abschneidmesser 34 von dem Schuh 18 bzw. der Aufspreizleiste fort verschwenkt. Wird das Messer nach unten und gegen den Schuh 18 verschwenkt, gelangt das Messerblatt 34 in eine vertikale Nut 35 in der Aufspreizleiste 23. Im Bereich der Nut 34 weist der Schuh 18 eine Ausnehmung 36 auf.

Ein Klebeband 37, das von der Rolle 17 abgewickelt wird, wird zunächst um die Umlenkrolle 13 geführt und anschließend von außen über die Umlenkstange 29. Von dort gelangt das Klebeband in den Durchbruch 25. Es wird im nicht gezeigten Schlitz einmal um die Führungsstange 30 herumgeschlungen und anschließend aus dem Schlitz heraus in den Durchbruch 27 geführt und seitlich an der rampenförmigen Fläche 28 vorbei. Das Klebeband ist doppelt klebend, auf einer Seite jedoch durch eine Abdeckfolie abgedeckt. Die klebende Seite des Klebebandendes ist bei der Darstellung nach Fig. 1 nach außen, d.h. aus der Zeichenebene herausweisend angeordnet.

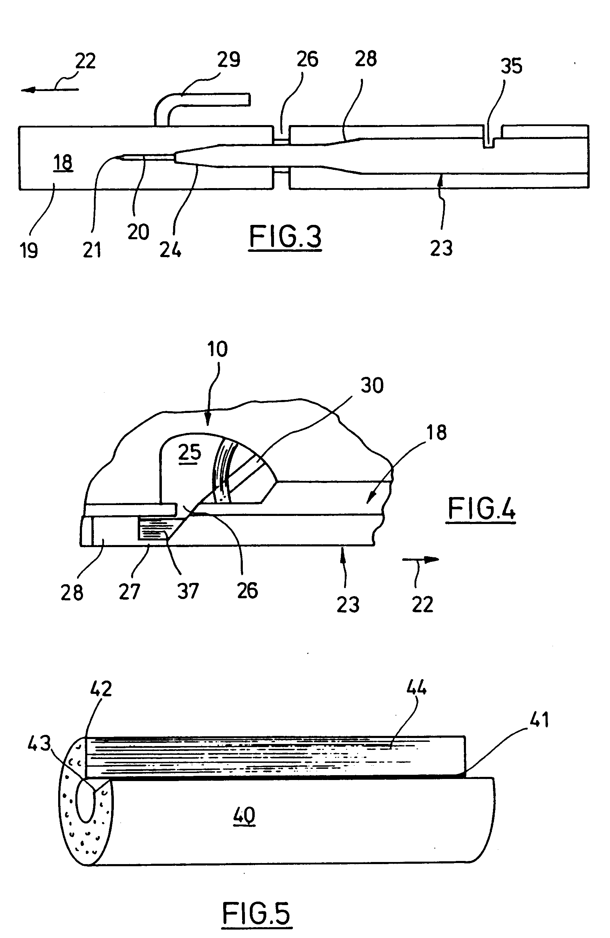

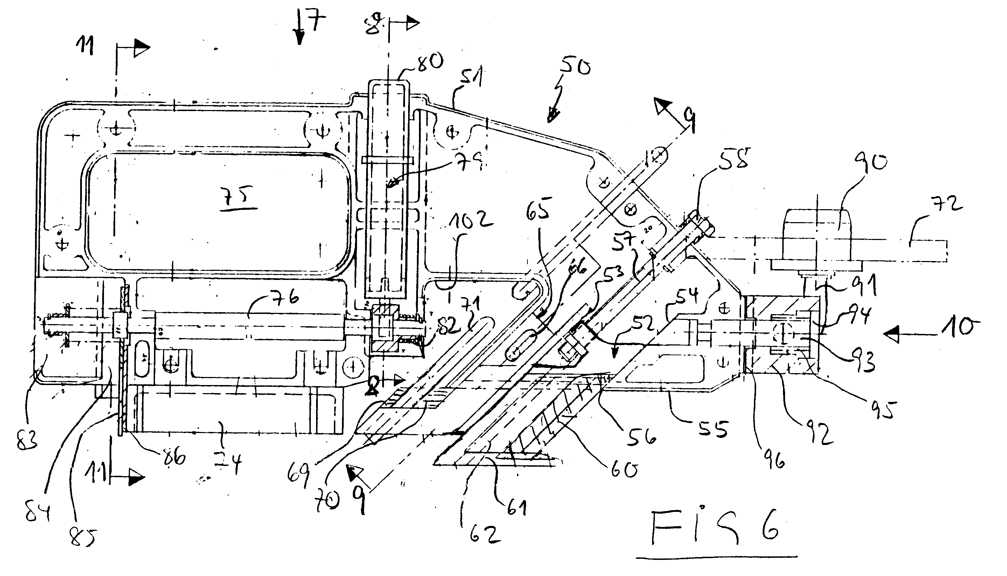

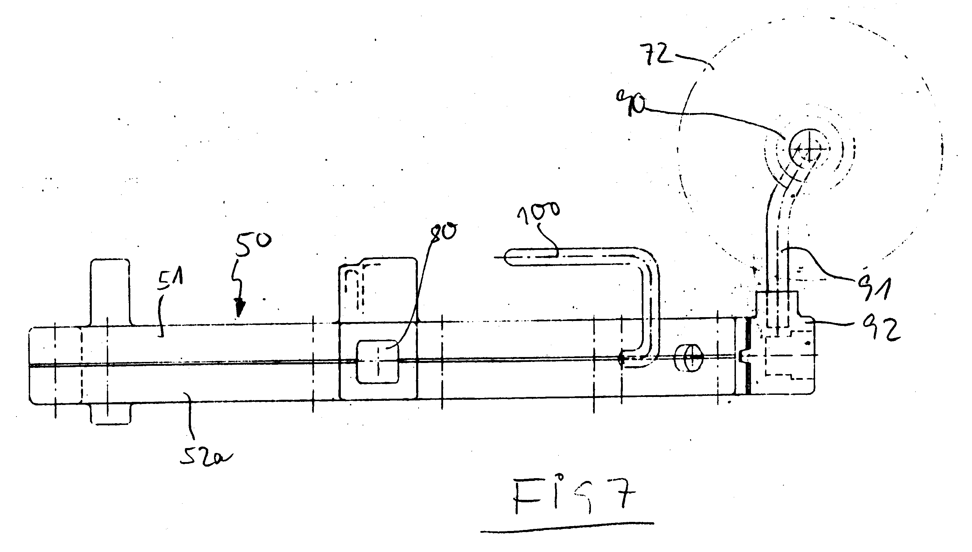

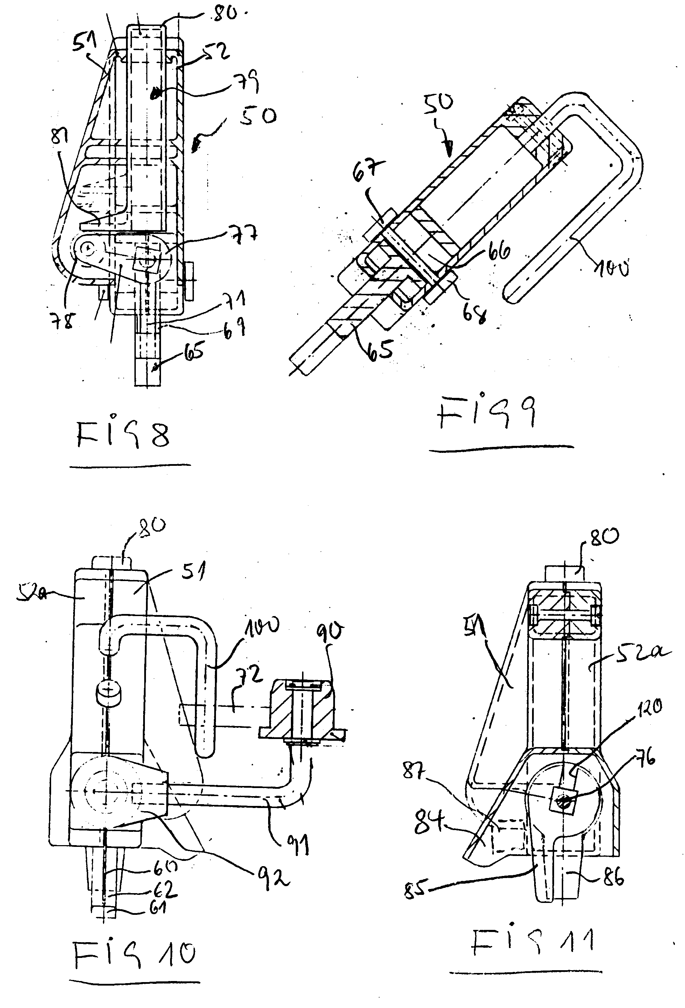

Es sei noch erwähnt, daß bei der Darstellung nach Fig. 3 Messerhalter 31 und Messer 34 sowie Lagerung 12, 15 und Rollen 13, 17 fortgelassen wurden.

Fig. 5 zeigt einen an sich bekannten Isolierschlauch 40 aus geschlossenzelligem Kunststoffschaummaterial. Der Isolierschlauch 40 ist durch einen Schnitt 41 in Längsrichtung einseitig aufgeschnitten. Die Schnittflächen 42, 43 sind zu Klarstellungszwecken etwas auseinandergespreizt. Auf die Schnittfläche 42 ist ein doppelt klebendes Klebeband 44 aufgebracht, wobei die freie Seite des Klebebands 44 durch einen Folienabdeckstreifen abgedeckt ist. Wird dieser Folienstreifen abgezogen, können die Schnittflächen 42, 43 miteinander verklebt werden.

Das Aufbringen eines Klebebandes 44 auf einen Schlauch 40 kann mit Hilfe der Vorrichtung nach den Figuren 1 bis 4 erfolgen. Zu diesem Zweck wird das Handgerät mit seiner Führungsfläche 19 auf einen Schlauchanfang aufgesetzt und in Richtung des Pfeils 22 vorgezogen. Auf der Führungsfläche 19 gleitend schneidet das Messer 20 einen Längsschnitt in die Schlauchwandung. Das Klebeband 37 befindet sich in einer Position, wie in Fig. 1 dargestellt, d.h. seitlich an der Aufspreizleiste 23 hinter dem Messer 20. Sobald das Klebeband mit einer Schnittfläche, beispielsweise der Schnittfläche 42 nach Fig. 5 in Berührung gerät, klebt das Klebeband 37 fest und wickelt sich dadurch selbsttätig von der Rolle 17 ab, wenn das Gerät in Richtung des Pfeils 22 weiter vorbewegt wird. Die keilförmigen Flächen 24 hinter dem Messer 20 und hinter der Zuführung des Klebebandes, wie bei 28 dargestellt, bewirken ein Aufspreizen des Schlauches und damit einen Preßdruck der Schnittflächen gegen die beiden Seiten der Aufspreizleiste 23. Auf diese Weise wird das Klebeband 37 fest gegen die zugeordnete Schnittfläche angepreßt und wirksam verklebt. Hat das Klebeband das Ende des Schnittes erreicht, kann es mit Hilfe des Messers 34 abgeschnitten werden. Der Messerhalter 31 wird von Hand in Richtung Nut 35 verschwenkt, wodurch das Klebeband automatisch abgeschnitten wird. Die Betätigung des Messerhalters 31 kann derart sein, daß im Bereich des Grifflochs 11 ein Betätigungshebel oder dergleichen angebracht ist, um die gewünschte Bewegung des Messerhalters 31 auszuführen. Dies ist jedoch nicht gezeigt.

Das in den Figuren 6 und 7 dargestellte Handgerät 50 weist ein Gebäude auf, das aus zwei in Längsrichtung geteilten Kunststoffschalen besteht, von denen eine in Fig. 6 bei 51 gezeigt ist. Die zweite Schale 52a ist in Fig. 7 zu erkennen. Ein Schlitten 52 ist mittels Schlittenführungen 53, 54, die sich schräg zur Längsachse des Gehäuses erstrecken, verschieblich geführt. An der Unterseite 55 des Gerätes ist eine Öffnung 56 gebildet, über die der Schlitten 52 nach unten ausfahrbar ist, wie in Fig. 6 dargestellt. Mit dem Schlitten 52 wirkt eine Gewindespindel 57 zusammen, die mit Hilfe einer Rändelschraube 58 oder dergleichen gedreht werden kann, um den Schlitten 52 in seiner Lage relativ zum Gehäuse zu verstellen. Das Gehäuse ist so ausgebildet, daß der Schlitten auch ganz versenkt werden kann.

Wie aus Fig. 6 ferner zu erkennen, ist der Schlitten als Messerhalter ausgebildet, der ein Messer 60 trägt. An der Unterseite weist der Schlitten 52 einen Schutzabschnitt 61 auf, der sich annähernd parallel zur Unterseite 55 entgegengesetzt der Schneidrichtung erstreckt über den unteren Bereich der Messerklinge 60 hinaus. Der Schutzabschnitt 61, der an der Unterseite eine Art Gleitkufe bildet, schützt nicht nur den Benutzer gegen ein unwillkürliches Anstoßen gegen die Schneide des Messers 60, sondern sorgt auch dafür, daß das Messer die Schlauchwand durchschneidet, indem er an der Innenseite des Schlauches entlangfährt. Im Bereich des Messers 60 verbreitert sich der Schlitten 52 keilförmig nach hinten, wobei in Fig. 6 die Keilfläche 62 zu erkennen ist. Der hintere Abschnitt des Schlittens 52 besitzt eine konstante Breite, die auch der Schutzabschnitt 61 besitzt.

Ein Führungsabschnitt 65 ist ebenfalls als Schlitten ausgebildet und parallel zum Schlitten 52 im Gehäuse geführt. Es weist ein Langloch 66 auf, durch das hindurch eine Schraube gesteckt ist, die mit Hilfe einer Rändelmutter oder dergleichen feststellbar ist, um das Führungsteil 65 in einer gewünschten Position festzulegen. Dies ist aus Fig. 9 zu erkennen. Die Schraube ist mit 67 und die Rändelmutter mit 68 bezeichnet. Das Führungsteil 65 weist die gleiche Dicke auf wie der Schlitten 52 in seinem hinteren Bereich. Es hat die Form eines Winkelstücks mit einem stumpfen Winkel, wobei der untere Abschnitt bei 69 eine Ausnehmung aufweist, deren eine Wand 70 eine Führungsfläche für das Klebeband bildet. Die Führungsfläche 70 ist geriffelt. Im Bereich der Führungsfläche 70 ist eine Führungsstange 71 im unteren Teil des Führungsteils 65 versenkt angeordnet. Es erstreckt sich parallel zum oberen Teil des Führungsteils 65, jedoch im Abstand dazu. Ein von einer Klebebandrolle 72 abgewickeltes Klebeband wird zunächst um die Führungsstange 71 gelegt und gelangt anschließend mit der klebenden Seite gegen die Führungsfläche 70, bevor es auf der unterhalb der Zeichenebene liegenden Seite einer Führungsleiste 74 entlang geführt wird. Diese Seite (nicht gezeigt) kann mehrere im Abstand voneinander angeordnete Rippen aufweisen, die senkrecht zur Längsachse des Gerätes verlaufen und ebenfalls nur eine geringe Anlagefläche für das Klebeband bilden. In diesem Bereich liegt jedoch die nicht klebende Seite des Klebebands an. Durch eine Höhenverstellung des Führungsteils 65 kann eine Anpassung an die Breite des Klebebands vorgenommen werden.

Unterhalb des Griffloches 75 des Gerätes 50 ist im Gehäuse parallel nur Längsachse eine Welle 76 drehbar gelagert.

Wie aus Fig. 8 hervorgeht, sitzt auf der Welle ein Kurbelarm 77, der am freien Ende eine Rolle 78 lagert. Oberhalb der Kurbel 77 ist eine Betätigungsstange 79 verschiebbar gelagert. Sie steht mit einem Druckabschnitt 80 aus der Oberseite des Gehäuses hinaus. Am unteren Ende weist die Betätigungsstange 79 einen seitlichen Ansatz 81 auf, der mit der Rolle 78 zusammenwirkt. Die Welle 76 ist mittels einer Feder 82 so vorgespannt, daß die Kurbel 77 bzw. die Rolle 78 gegen den Ansatz 81 geschwenkt wird. Durch Herunterdrücken der Betätigungsstange 79 kann daher die Welle 76 um einen gewissen Winkel verdreht werden.

Die Welle 76 ist in einem hinteren Abschnitt 83 des Gehäuses drehbar gelagert. In einer in der Breite erweiterten Ausnehmung 84 des Gehäuses ist ein Abschneidemesser 85 auf der Welle 76 angeordnet. (Siehe auch Fig. 11). Es wirkt mit einer Gegenplatte 86 zusammen, die fest in der Ausnehmung 84 angeordnet ist. In den Figuren 6 und 11 ist das Messer 85 in der betätigten Position gezeichnet. In der Ruhestellung schwenkt das Messer in Fig. 11 in Uhrzeigerrichtung und wird dabei vollständig von der Ausnehmung 84 aufgenommen. In der Ausnehmung 84 ist eine Filzschicht 87 angebracht, an der das Messer während seiner Schwenkbewegung entlangstreift. Die Filzschicht 87 wird mit Öl oder einem anderen geeigneten Medium getränkt, das verhindert, daß sich Klebstoff am Abschneidemesser 85 ansammelt.

Die Klebebandrolle 72 wird von einer Rolle 90 aufgenommen, die drehbar an einem Arm 91 gelagert ist. Am anderen Ende ist der Arm 91 mit einem Lagerbauteil 92 verbunden. Das Lagerbauteil 92 ist als Hülse ausgebildet, die auf einem Achszapfen 93 angeordnet ist, der achsparallel im Gehäuse 50 angeordnet ist. Der Achszapfen 93 weist am vorderen Ende einen Kopf 94 auf, der die Bewegung des Lagerbauteils 92 von der Stirnseite des Gehäuses 50 fort begrenzt. In einem Zwischenraum zwischen Achszapfen 93 und der Bohrung des Lagerbauteils 92 ist eine Feder 95 angeordnet, die das Lagerbauteil 92 in Richtung Stirnseite des Gehäuses 50 beaufschlagt. Am gehäuseseitigen Ende weist das Lagerbauteil 93 zwei diametral angeordnete Klauen 96 auf, die mit entsprechenden Ausnehmungen im Gehäuse 50 zusammenwirken dergestalt, daß das Lagerbauteil 92 aus der in Fig. 6 bzw. Fig. 7 gezeigten Position um 90° verschwenkt werden kann, so daß der Arm 91 bzw. die Klebebandrolle 72 sich annähernd in der Ebene des Gehäuses 50 befindet. Auf diese Weise kann das Gerät raumsparend gelagert werden.

Wie bereits erwähnt, wird das Klebeband von der Rolle 72 zunächst unterhalb der seitlich abstehenden, annähernd parallel zum Gehäuse 50 verlaufenden Führungsstange 100, die über einen Bügel mit der Oberseite des Gerätes verbunden ist, so geführt, daß es über die Führungsstange 71 in den Führungsraum 102 im Gehäuse außen herumgeführt wird und anschließend durch den Spalt zwischen der Führungsstange 71 und der Führungsfläche 70 hindurchgeführt wird, um anschließend auf der in Fig. 6 gegenüberliegenden Seite der Führungsleiste 74 entlanggeführt zu werden. Erfolgt nun mit Hilfe des gezeigten Gerätes das Durchschneiden eines Schlauches, legt sich die klebende Seite des Klebebands gegen eine Wand des Schnittes und wird, dadurch festgehalten, weiter von der Rolle 72 abgezogen und dabei fortlaufend gegen eine Schnittwand gelegt. Nach Beendigung des Durchschneidens wird die Druckstange 79 betätigt, und das Abschneidemesser 85 schneidet das Klebeband ab.

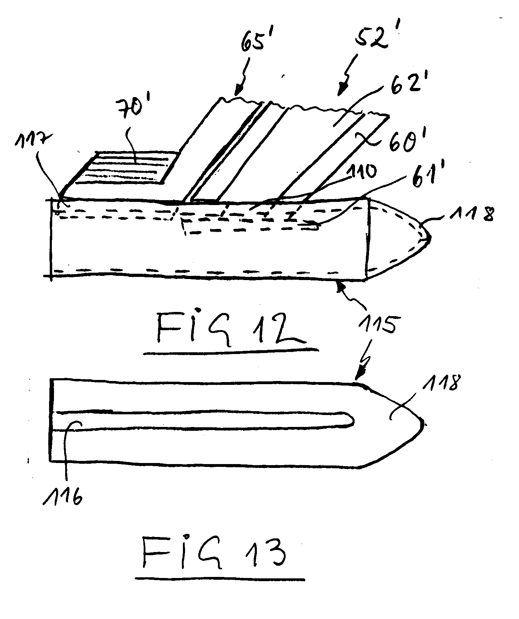

Soweit in den Figuren 12 und 13 gleiche oder ähnliche Teile wie bei der Ausführungsform nach Fig. 6 verwendet werden, werden gleiche Bezugszeichen verwendet, die mit einem Beistrich versehen sind.

Der schuhartige Schutzabschnitt 61' weist zwei Nuten 110 auf. Sie dienen zur Aufnahme eines hohlzylindrischen Führungsstücks 115, das in seiner Wand einen achsparallelen Schlitz 116 aufweist. Die Seitenwände des Schlitzes 116 wirken mit den Nuten 110 zusammen, so daß das Führungsstück 115 unterhalb des Messers 60' wirksam angebracht ist. Auch das Führungsteil 65' weist zwei Nuten 117 auf, die mit dem Schlitz 116 zusammenwirken. Das Führungsteil ist bei 118 mit einer konischen Spitze versehen.

Das Führungsstück 118 ist vorzugsweise an den Durchmesser des Schlauchs oder dergleichen angepaßt. Je nach Größe des verwendeten Schlauchs wird daher ein anderes auf dessen Innendurchmesser abgestimmtes Führungsstück 118 aufgesetzt. Das Führungsstück 118 bewirkt, daß das Messer radial stets in gleicher Höhe verläuft und auch quer zur Längsachse nicht verkantet, so daß ein glatter gerader sauberer Schnitt erzielt wird. Ferner wird erreicht, daß sich das Klebeband in richtiger Höhe an die betreffende Schnittfläche anlegt.

Es versteht sich jedoch, daß auch ein Führungsstück 115 eine wirksame Verbesserung darstellt, wenn es einen etwas geringeren Durchmesser aufweist als der Innendurchmesser des Schlauchs.

Bezüglich der Figuren 6 und 11 ist noch folgendes nachzutragen. Wie aus Fig. 6 zu erkennen, besteht hinter dem Abschneidemesser 85 ein Freiraum 84. Wie aus Fig. 11 zu erkennen, sitzt das Abschneidemesser 85 auf einem Vierkantabschnitt der Welle 76. Das Messer 85 kann nun durch Handbetätigung nach hinten gezogen werden in den Freiraum 84 bis zum zylindrischen im Durchmesser kleineren Abschnitt der Welle 76. In diesem Bereich ist der Durchmesser der Welle kleiner als die Breite eines Schlitzes 120 im Messer 85, so daß das Messer auf diese Weise ohne weiteres entfernt und durch ein anderes ausgetauscht werden kann.

Die erfindungsgemäße Vorrichtung ist besonders vorteilhaft für aus Kunststoffisoliermaterial bestehende Isolierschläuche. Sie kann jedoch auch für Rohre oder Schläuche für andere Anwendungszwecke verwendet werden, die aus Kunststoff, Kautschuk oder ähnlichem Material bestehen.

**Patentansprüche**

1. Vorrichtung zum Herstellen von geschlitzten Isolierschläuchen für Rohre oder dergleichen, insbesondere aus geschäumtem Kunststoff, bei dem der schlauchförmig extrudierte Schlauch (40) in Längsrichtung einseitig aufgeschnitten und eine Schnittfläche (42) mit einem Klebeband (37) versehen ist, das durch eine folienartige Abdeckung abgedeckt ist, gekennzeichnet durch ein Handgerät, das ein Griffteil (11), an der Unterseite ein Messer (20), ein Lagerbauteil (15, 16) für ein Klebebandrolle (17) sowie Führungsmittel (13, 29, 30) für das von der Rolle (17) abgewickelte Klebeband (37) aufweist derart, daß das Klebeband (37) in Schneidrichtung (22) gesehen hinter das Messer (20) etwa in dessen Höhe und annähernd entgegen der Schneidrichtung (22) geführt ist.

2. Vorrichtung nach Anspruch 1, dadurch gekennzeichnet, daß am Handgerät in Schneidrichtung (22) gesehen hinter dem Messer (20) ein Abschneidmesser (34) beweglich gelagert ist.

3. Vorrichtung nach Anspruch 2, dadurch gekennzeichnet, daß dem Griffteil ein Betätigungsglied für das Abschneidmesser (34) zugeordnet ist.

4. Vorrichtung nach einem der Ansprüche 1 bis 3, dadurch gekennzeichnet, daß das Messer (20) über eine Führungsfläche (19) nach unten vorsteht.

5. Vorrichtung nach Anspruch 4, dadurch gekennzeichnet, daß in Schneidrichtung (22) gesehen hinter dem Messer (20) ein Aufspreizmittel (23) nach unten über die Führungsfläche (19) vorsteht zwecks Aufspreizung des Schlauches an der Schnittstelle mindestens bis jeweils an dem Ort, an dem das Klebeband (37) gegen die Schnittstelle geführt wird.

6. Vorrichtung nach Anspruch 5, dadurch gekennzeichnet, daß eine Aufspreizleiste (23) vorgesehen ist, die sich zum Messer (22) hin keilförmig (24) verjüngt und das Klebeband (37) aus einer seitlichen Öffnung (37) der Aufspreizleiste (23) heraustritt.

7. Vorrichtung nach Anspruch 6, dadurch gekennzeichnet, daß in Schneidrichtung (22) gesehen hinter der seitlichen öffnung (27) eine rampenartige Andrückfläche (28) vorgesehen ist, durch welche eine zusätzliche Spreizung erfolgt.

8. Vorrichtung nach einem der Ansprüche 1 bis 7, dadurch gekennzeichnet, daß das Lagerbauteil (16) für die Klebebandrolle (17) an einem seitlichen Arm (15) des Gerätes angebracht ist.

9. Vorrichtung nach einem der Ansprüche 1 bis 8, dadurch gekennzeichnet, daß das Messer (20) lösbar angebracht ist.

10. Vorrichtung nach einem der Ansprüche 1 bis 9, dadurch gekennzeichnet, daß das Messer (20, 60) in seiner Höhe verstellbar ist, vorzugsweise mit Hilfe einer Gewindespindel (57) oder eines in verschiedenen Höhenstellungen einrastenden Gleitstücks.

11. Vorrichtung nach Anspruch 10, dadurch gekennzeichnet, daß ein Messerhalter (52) das Messer (60) vollständig aufnimmt und mit einem unteren Schutzabschnitt (61) versehen ist, der entgegen der Schneidrichtung zumindest teilweise über die Schneidkante hinaussteht.

**12.** Vorrichtung nach Anspruch 10 oder 11, dadurch gekennzeichnet, daß das Messer (60) vollständig im Gehäuse (50) versenkbar ist.

**13.** Vorrichtung nach einem der Ansprüche 6 bis 12, dadurch gekennzeichnet, daß ein Teil (65) der Aufspreizleiste als getrenntes Führungsteil ausgebildet ist, das ebenfalls höhenverstellbar im Gehäuse (50) gelagert ist.

**14.** Gerät nach Anspruch 13, dadurch gekennzeichnet, daß das Führungsteil (15) eine Gleitfläche (70) und im Abstand dazu einen Umlenkstab (71) vorgesehen sind und die Gleitfläche (70) in Führungsrichtung des Klebebands geriffelt ist.

**15.** Gerät nach Anspruch 3, dadurch gekennzeichnet, daß das Abschneidemesser (85) auf einer in Längsrichtung des Gehäuses (50) sich erstreckenden Welle (76) sitzt und im Gehäuse (50) eine von oben betätigbare Betätigungsstange (79) gelagert ist, die über eine Kurbel (77) mit der Welle (76) zusammenwirkt.

**16.** Gerät nach Anspruch 2, dadurch gekennzeichnet, daß das Abschneidemesser (85) in seiner Ruhestellung versenkt im Gehäuse (50) liegt.

**17.** Gerät nach Anspruch 1, dadurch gekennzeichnet, daß das Abschneidemesser (85) während seiner Schwenkbewegung an einem saugfähigen Material, vorzugsweise Filz (87), entlangstreift.

**18.** Gerät nach Anspruch 8, dadurch gekennzeichnet, daß der Arm (91) an der vorderen Stirnseite des Gehäuses (50) schwenkbar gelagert ist und in der seitlich auskragenden Betriebsstellung und in der in der Ebene des Gehäuses (50) liegenden Ruhestellung verriegelbar ist.

**19.** Gerät nach Anspruch 18, dadurch gekennzeichnet, daß der Arm (91) in Richtung seiner Drehachse begrenzt verschiebbar gelagert ist und von einer Feder in Richtung Gehäuse (50) vorgespannt ist und am Arm mindestens ein Vorsprung angeordnet ist, der mit die Betriebs- und die Ruhestellung definierenden Ausnehmungen zusammenwirkt.

**20.** Vorrichtung nach einem der Ansprüche 1 bis 18, dadurch gekennzeichnet, daß der Messerhalter (52') an der Unterseite unterhalb des Messers (60') einen Halteabschnitt (61') aufweist zur vorzugsweise auswechselbaren Anbringung eines zylindrischen Führungsstücks (115).

**21.** Vorrichtung nach Anspruch 20, dadurch gekennzeichnet, daß das Führungsstück (115) hohlzylindrisch ist und in der Wand eine achsparallele Nut (116) aufweist, die mit Nuten (110) des Halteabschnitts (61') zusammenwirkt.

**22.** Vorrichtung nach Anspruch 13 oder 14 und 20 oder 21, dadurch gekennzeichnet, daß das Führungsteil (65') ebenfalls Nuten (117) aufweist, die mit der achsparallelen Nut des Führungsstücks (115) zusammenwirken.

**Claims**

**1.** Apparatus for making insulating slit tubes, particularly of foamed plastics, for pipes or similar articles, wherein the tube (40) is slit longitudinally and one (42) of the longitudinally extending opposing surfaces of the slit is provided with an adhesive tape (37) covered by a protective layer, characterized by a manually operable device including a grip portion (11), a knife (20) at the underside, a support portion (15, 16) for a roll for the adhesive tape and guide means (13, 29, 30) for the tape (37) to be drawn from the roll (17) such that at a location behind the knife (20) if looked in cutting direction, the tape (37) is guided opposite to the cutting direction (22) approximately at the level of the knife.

**2.** The apparatus of claim 1, wherein a severing knife (34) is movably supported behind the knife (20) if looked in cutting direction.

**3.** The apparatus of claim 2, wherein an actuating member for the severing knife (34) is associated with the gripping portion.

**4.** The apparatus of one of the claims 1 to 3, wherein the knife projects downwardly beyond a guiding surface (19).

**5.** The apparatus of claim 4, wherein behind the knife (20) if looked in cutting direction (22) a spreading means (39) projects downwardly beyond the guiding surface (19) in order to spread the tube at the slit at least up to the location where the adhesive tape (37) is guided to the cutting location.

6. The apparatus of claim 5, wherein a spreading ledge (23) is provided which tapers like a wedge towards the knife (22) and the adhesive tape (37) exits from a lateral opening (37) the spreading ledge (23).

7. The apparatus of claim 6, wherein behind the lateral opening (22) if looked in cutting direction (22) a ramp-shaped pressure surface (28) is provided whereby an additional spreading is achieved.

8. The apparatus of one of the claims 1 to 7, wherein the supporting member (16) for the roll for the adhesive tape is mounted on a lateral arm (15) of the device.

9. The apparatus of one of the claims 1 to 8, wherein the knife (20) is releasably mounted.

10. The apparatus according to one of the claims 1 to 9, wherein the knife (20, 60) is provided with an elevation adjustment, preferably by means of a threaded spindle (57) or by a sliding member to be locked at different elevated positions.

11. The apparatus of claim 10, wherein a retainer (52) completely accommodates the knife (60) and is provided with a lower protecting portion (61) which at least partially protrudes beyond the cutting edge oppositely to the cutting direction.

12. The apparatus of claim 10 or 11, wherein the knife (60) is adapted to be countersunk completely in the housing (50).

13. The apparatus of one of the claims 6 to 12, wherein a portion (65) of the spreading ledge is formed as separate guiding member which is supported by the housing (50) for elevation adjustment.

14. The apparatus of claim 13, wherein the guiding member (15) has a sliding surface (70) and a deflection rod (71) is arranged at a distance from the sliding surface and the sliding surface (70) has grooves extending along the guiding direction of the adhesive tape.

15. The apparatus of claim 3, wherein the severing knife (85) is mounted on a shaft (76) extending along the longitudinal direction of the housing (50), and the housing (50) supports an actuating rod (79) actuable from above, the actuating rod cooperating with the shaft (76) through a crank (77).

16. The apparatus of claim 2, wherein in its rest position the severing knife (85) is countersunk in a housing (50).

17. The apparatus of claim 1, wherein the severing knife (85) during its pivotal movement sweeps along absorbent material, preferably felt (87).

18. The apparatus of claim 8, wherein an arm (91) is pivotally supported at the front portion of the housing, and the arm can be locked in a laterally projecting operating position and in a rest position lying in the plane of the housing (50).

19. The apparatus of claim 18, wherein the arm (91) is limitedly displaceable in the direction of its rotational axis and is biased towards the housing (50) by spring means, and a projection is located on the arm coacting with notches defining the operating and the rest position, respectively.

20. The apparatus of one of the claims 1 to 18, wherein the retaining member (52) for the knife has a retaining portion (61') at the underside below knife (60') for the preferably replaceable assembly of a cylindrical guiding member (115).

21. The apparatus of claim 20, wherein the guiding member (115) is hollow-cylindrical and provided with a groove (116) in its wall parallel to the axis, with the groove cooperating with grooves (110) of the retaining portion (61').

22. The apparatus of claim 13 or 14 and 20 or 21, wherein the guiding member (65') has also grooves (117) which cooperate with the axial parallel groove of the guiding member (115).

**Revendications**

1. Dispositif de fabrication de gaines tubulaires isolantes fendues pour des tubes ou similaires, en particulier en matière synthétique expansée, dans lequel la gaine tubulaire (40), extrudée sous forme de tube, coupée sur un côté dans la direction longitudinale et une surface de coupe (42) est pourvue d'une bande adhésive (37) qui est recouverte par un revêtement en forme de feuille,
caractérisé par un appareil à main qui comprend une poignée (11), un couteau (20) à sa partie inférieure, un sous-ensemble (15, 16) de stockage pour un rouleau (17) de bande adhésive ainsi que des moyens de guidage (13, 29, 30) pour la bande adhésive (37) déroulée du rouleau (17), de telle sorte que la bande adhésive (37), en vue selon la direction de coupe (22), est guidée derrière le couteau (20) à peu près à hauteur de celui-ci et à peu près en direction opposée à la direction de coupe (22).

2. Dispositif selon la revendication 1, caractérisé en ce qu'un couteau de tranchage (34) est logé de façon mobile sur l'appareil à main, derrière le couteau (20) selon la vue de la direction de coupe (22).

3. Dispositif selon la revendication 2, caractérisé en ce qu'un organe d'actionnement du couteau de tranchage (34) est associé à la poignée.

4. Dispositif selon l'une des revendications 1 à 3, caractérisé en ce que le couteau (20) est en saillie vers le bas au-delà d'une surface de guidage (19).

5. Dispositif selon la revendication 4, caractérisé en ce qu'un moyen d'écartement (23), situé derrière le couteau (20) en vue selon la direction de coupe (22) est en saillie au-delà de la surface de guidage (19) pour ouvrir la gaine tubulaire en l'écartant à l'emplacement de coupe au moins jusqu'à l'endroit où la bande adhésive (37) est amenée contre l'emplacement de coupe.

6. Dispositif selon la revendication 5, caractérisé en ce qu'il est prévu une baguette d'écartement (23) qui se rétrécit en forme de coin (24) vers le couteau (22), et en ce que la bande adhésive (37) sort d'un orifice latéral (30) de la baguette d'écartement (23).

7. Dispositif selon la revendication 6, caractérisé en ce qu'une surface d'appui en forme de rampe (28), à l'aide de laquelle s'effectue un écartement additionnel, est prévue derrière l'orifice latéral (27) en vue selon la direction de coupe (22).

8. Dispositif selon l'une des revendications 1 à 7, caractérisé en ce que le sous-ensemble (16) de logement du rouleau (17) de bande adhésive est monté sur un bras latéral (15) de l'appareil.

9. Dispositif selon l'une des revendications 1 à 8, caractérisé en ce que le couteau (20) est monté de façon détachable.

10. Dispositif selon l'une des revendications 1 à 9, caractérisé en ce que le couteau (20, 60) est réglable en hauteur, de préférence à l'aide d'une tige filetée (57) ou d'un coulisseau qui s'encliquette à différentes positions en hauteur.

11. Dispositif selon la revendication 10, caractérisé en ce qu'un porte-couteau (52) reçoit complètement le couteau (60) et est pourvu d'une partie inférieure de protection (61) qui fait au moins partiellement saillie au-delà de l'arête de coupe dans la direction opposée à la direction de coupe.

12. Dispositif selon la revendication 10 ou 11, caractérise en ce que le couteau (60) peut être totalement enfoncé dans le boîtier (50).

13. Dispositif selon l'une des revendications 6 à 12, caractérisé en ce qu'un élément (65) de la baguette d'écartement est réalisé sous forme d'élément de guidage séparé qui est également logé de manière réglable en hauteur dans le boîtier (50).

14. Dispositif selon la revendication 13, caractérisé en ce qu'une surface de glissement (70) et une barrette (71) de déviation espacée de celle-ci sont prévues sur l'élément de guidage (15) et en ce que la surface de glissement (70) est striée dans la direction de guidage de la bande adhésive.

15. Dispositif selon la revendication 3, caractérisé en ce que le couteau de tranchage (85) repose sur un arbre (76) s'étendant dans la direction longitudinale du boîtier (50) et en ce qu'une tige d'actionnement (79) actionnable depuis le haut, qui coopère avec l'arbre (76) au moyen d'une manivelle (77), est logée dans le boîtier (50).

16. Dispositif selon la revendication 2, caractérisé en ce que le couteau de tranchage (85) est enfoncé dans le boîtier (50) dans sa position de repos.

17. Dispositif selon la revendication 1, caractérisé an ce que le couteau de tranchage (85) affleure une matière absorbante, de préférence du feutre (87), pendant son déplacement à pivotement.

18. Dispositif selon la revendication 8, caractérisé en ce que le bras (91) est logé à pivotement sur la face frontale avant du boîtier (50) et peut être verrouillé dans la position de fonctionnement en saillie latérale et dans la position de repos située dans le plan du boîtier (50).

19. Dispositif selon la revendication 18, caractérisé en ce que le bras (91) est logé à coulissement limité dans la direction de son axe de rotation et est sollicité par un ressort en direction de boîtier (50) et en ce qu'au moins une saillie, qui coopère avec des évidements définissant la position de fonctionnement et la position d'arrêt, est disposée sur le bras.

20. Dispositif selon l'une des revendications 1 à 18, caractérisé en ce que le porte-couteau (52') comporte sur son côté inférieur au-dessous du couteau (60') une partie de maintient (61') pour monter, de préférence, de façon interchangeable, un élément de guidage cylindrique (115).

21. Dispositif selon la revendication 20, caractérisé en ce que l'élément de guidage (115) est en forme de cylindre creux et comporte dans la paroi une rainure parallèle à l'axe (116) qui coopère avec des rainures (110) de la partie de maintien (61').

22. Dispositif selon la revendication 13 ou 14 ou 20 ou 21, caractérisé en ce que l'élément de guidage (65') comporte aussi des rainures (117) qui coopèrent avec la rainure parallèle à l'axe de l'élément de guidage (115).

## FIG.1

## FIG.2

FIG.3

FIG.4

FIG.5

Fig 6

72

90

50

51

80

100

52a

91

92

FIg7

Fig 8

Fig 9

Fig 10

Fig 11

FIG 12

FIG 13